# EUROPEAN PATENT APPLICATION

(11) **EP 4 661 177 A1**
(43) Date of publication of application: **10.12.2025**
(21) Application number: 24894296.3
(22) Date of filing: 29.07.2024
(51) Int. Cl.: H01M 50/24, H01M 50/502, H01M 50/105, H01M 10/658, H01M 50/342, H01M 50/242, H01M 50/211, H01M 50/249

(54) **BATTERY MODULE, BATTERY PACK AND VEHICLE INCLUDING SAME**

(30) Priority: 20.11.2023 KR 20230160357
(71) Applicant: LG Energy Solution, Ltd., Seoul 07335 (KR)
(72) Inventor: UHM, Jae-Yong, Daejeon 34122 (KR)
(74) Representative: Plasseraud IP
(86) International application number: PCT/KR2024/011041
(87) International publication number: WO 2025/110399

(57) **Abstract**

There is provided a battery module capable of delaying thermal propagation to adjacent battery cells by controlling the direction of gas and flame emitted from a battery cell. A battery module according to the present disclosure includes: a cell stack including multiple battery cells; and one or more physical members, wherein an intumescent fire protection member is provided on a surface of a physical member closest to the cell stack, among the physical members, which faces the cell stack, wherein the intumescent fire protection member is a coating layer formed integrally with the physical member by applying an intumescent fire protection material, and wherein the intumescent fire protection member is configured to expand into a space between adjacent battery cells when the battery cell generates heat, thereby isolating the adjacent battery cells from each other.

## Description

### TECHNICAL FIELD

The present disclosure relates to a battery module, a battery pack, and a vehicle including the same, and more specifically, to a battery module and a battery pack having a configuration for delaying thermal runaway, and a vehicle including the same. This application is based on and claims priority from Korean Patent Application No. 10-2023-0160357, filed on November 20, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are widely used as a new energy source for improving eco-friendliness and energy efficiency because of the primary advantage of dramatically reducing the use of fossil fuels and another advantage of not generating by-products resulting from energy use.

Medium-sized and large-sized devices such as vehicles need high output and large capacity, so they use battery modules obtained by electrically connecting multiple battery cells and medium- and large-sized battery packs including the battery modules as unit modules. Since it is desirable to manufacture these battery modules and battery packs with a small size and a low weight, prismatic batteries or pouch-type batteries, which are able to be stacked with high density and have small weight relative to capacity, are mainly used as unit cells of the battery modules. In particular, pouch-type battery cells that use aluminum laminate sheets as exterior members are in the spotlight due to their advantages such as small weight, low manufacturing cost, and easy shape transformation.

However, since battery cells involve chemical reactions during charging and discharging, their performance may deteriorate when used in an environment higher than an appropriate temperature, and if heat control fails at the appropriate temperature, it may lead to unexpected ignition or explosion. In addition, the battery module has a structure in which the battery cells are intensively stored inside the module case. Therefore, if a thermal event occurs in any one battery cell, high-temperature gas and flame emitted therefrom may spread to adjacent battery cells, causing a chain reaction of battery cell explosions, which is very dangerous.

In particular, as thermal propagation delay technology of vehicle battery modules is required these days, it is necessary to suppress and delay the gas or flame released outside the battery module. The venting gas emitted before the battery module ignites may lead to a chain reaction of ignitions, so a solution thereto is needed.

However, the pouch-type battery cells have a problem in which flame easily spreads to adjacent battery cells through the electrode leads during thermal runaway. However, the current battery module has no structure capable of controlling the direction of gas and flame therein.

### DISCLOSURE

### Technical Problem

The present disclosure is designed to solve the problems of the related art, and therefore the present disclosure is directed to providing a battery module capable of controlling the direction of gas and flame emitted from the battery cell, thereby delaying thermal propagation to adjacent battery cells.

The present disclosure is also to provide a battery pack and a vehicle including the battery module.

### Technical Solution

**In** one aspect of the present disclosure, there is provided a battery module including: a cell stack including multiple battery cells; and one or more physical members, wherein an intumescent fire protection member is provided on a surface of a physical member closest to the cell stack, among the physical members, which faces the cell stack, wherein the intumescent fire protection member is a coating layer formed integrally with the physical member by applying an intumescent fire protection material, and wherein the intumescent fire protection member is configured to expand into a space between adjacent battery cells when the battery cell generates heat, thereby isolating the adjacent battery cells from each other.

Another battery module of the present disclosure includes: a cell stack including multiple battery cells; a bus-bar frame assembly disposed on at least one side of the cell stack and including a bus-bar and a bus-bar frame; and an intumescent fire protection member provided in the bus-bar frame assembly, wherein the bus-bar frame includes a rib to be positioned in a gap between adjacent battery cells, and wherein the intumescent fire protection member is located on the rib.

The battery cell may be a pouch-type battery cell including an electrode lead, a receiving portion, and a sealing portion, and the rib of the bus-bar frame may be at least partially positioned in a gap between the sealing portions or receiving portions of adjacent battery cells and may protrude toward the receiving portion.

The rib may be a plate-shaped protrusion having a constant thickness.

The rib may be integrally injection-molded with the bus-bar frame and may be provided at a position that does not overlap a lead slot, which is provided in the bus-bar frame so that the electrode lead passes therethrough.

The intumescent fire protection member may expand into a space between adjacent battery cells when the battery cell generates heat, thereby isolating the adjacent battery cells from each other.

The intumescent fire protection member may expand to the receiving portion when the battery cell generates heat.

A gap may be maintained between a rear surface of the bus-bar frame and the battery cell, and the rib may be provided on the rear surface of the bus-bar frame so as to protrude in a direction of the gap, and the intumescent fire protection member may expand when the battery cell generates heat and reach the battery cell to eliminate the gap.

The expanded intumescent fire protection member may fill a gap between the battery cells and may be shaped to conform to a shape of the gap.

The intumescent fire protection member may be a coating layer formed integrally with the rib by applying an intumescent fire protection material.

The intumescent fire protection member may wrap only a portion of the rib in a longitudinal direction, instead of wrapping one end or the other end of the rib in the longitudinal direction.

The fire protection material may be a liquid paint obtained by mixing a foaming material and a polymer, and the intumescent fire protection member may be insulating.

The intumescent fire protection member may block flame and gas generated from a battery cell that has ignited when the battery module ignites internally from moving in a stacking direction of the battery cells or a longitudinal direction of the battery cells.

The battery module may further include a module case configured to accommodate the cell stack, the bus-bar frame assembly, and the intumescent fire protection member, and may include multiple venting holes on a lower surface of the module case.

The cell stack may be in the form of a compressible pad and may further include a blocking member made of silicone, aerogel, or polyurethane.

The rib may have a hole penetrating both sides thereof, and an intumescent fire protection member formed on a surface of the rib may fill the hole.

The rib may be a component in which a fire-resistant material is packaged on a surface of the rib by heterogeneous injection-molding, and the rib may be assembled to the bus-bar frame.

Repetitive notches or a sawtooth-shaped uneven portion may be provided on one side of a contact surface of the rib with the intumescent fire protection member.

A battery pack according to the present disclosure may include at least one battery module according to the present disclosure.

A vehicle according to the present disclosure may include at least one battery module according to the present disclosure or a battery pack of the present disclosure.

### Advantageous Effects

According to one aspect of the present disclosure, there is provided a battery module that does not use many parts and has a compact structure while delaying thermal propagation to adjacent battery cells.

According to the present disclosure, the safety of a battery module or a battery pack is improved by controlling the discharge direction of gas and flame.

According to the present disclosure, explosion due to a short circuit of a battery module or a battery pack may be prevented in a thermal runaway situation.

A vehicle with improved safety may be provided by including such a battery module or battery pack.

### DESCRIPTION OF DRAWINGS

FIG. 1 is a conceptual diagram of a battery module proposed in the present disclosure.
FIG. 2 is a perspective view of a battery module according to an embodiment of the present disclosure.
FIG. 3 is an exploded perspective view of a battery module according to an embodiment of the present disclosure.
FIG. 4 is a top view of a battery module in which a bus-bar frame has not been coupled to a cell stack according to an embodiment of the present disclosure.
FIG. 5 is a top view illustrating a partial cross-section of a battery module in which a bus-bar frame has been coupled to a cell stack according to an embodiment of the present disclosure.
FIG. 6 is an enlarged view of part A in FIG. 3.
FIG. 7 is an enlarged view of a part of a bus-bar frame in a battery module according to another embodiment of the present disclosure.
FIG. 8 is an enlarged view of a part of a bus-bar frame in a battery module according to another embodiment of the present disclosure.
FIG. 9 is a schematic drawing illustrating a battery pack according to an embodiment of the present disclosure.
FIG. 10 is a schematic drawing of a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. In the respective embodiments, redundant descriptions of substantially identical or similar configurations will be omitted, and a description will made based on the differences therebetween.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the left-right direction, the Y-axis direction may indicate the forward-backward direction perpendicular to the X-axis direction on the horizontal plane (X-Y plane), and the Z-axis direction may indicate the upward-downward direction (vertical direction) perpendicular to both the X-axis direction and the Y-axis direction.

The present disclosure provides a flame direction induction battery module for thermal runaway delay. It also provides a battery pack and a vehicle including such a battery module.

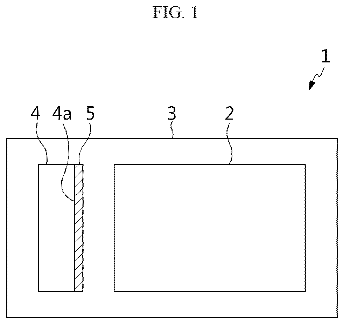

FIG. 1 is a conceptual diagram of a battery module proposed in the present disclosure.

Referring to FIG. 1, the battery module 1 is configured to further include components such as a cell stack 2 and a module case 3. The battery module 1 has a cell stack 2 in which battery cells are stacked as its basic configuration. The cell stack 2 is accommodated in the module case 3. The module case 3 further includes one or more physical members 4 for maintaining electrical components and structures for electrical connection of the battery cells.

The battery module 1 particularly includes an intumescent fire protection member 5 provided in at least a portion of the physical member 4. In particular, it is preferable that the intumescent fire protection member 5 is provided in the physical member 4 that is located closest to the cell stack 2, among the physical members 4. In addition, it is preferably provided on the surface of the physical member 4 facing the cell stack 2, that is, the cell-adjacent surface 4a of the physical member 4.

Furthermore, the intumescent fire protection member 5 may be a coating layer formed integrally with the physical member 4 by applying an intumescent fire protection material. The intumescent fire protection material contains a foaming material that foams when heated. If heat is generated in the battery cell, the foaming material may foam, so that the intumescent fire protection member 5 expands.

The intumescent fire protection member 5 may be positioned to face the part of the battery cell where heat is mainly generated. For example, if the basic unit of the cell stack 2 is a pouch-type battery cell, the intumescent fire protection member may be provided on an adjacent physical member so as to be positioned around the electrode lead of the pouch-type battery cell. When heat is generated in the pouch-type battery cell, the intumescent fire protection member 5 around the same expands. If the intumescent fire protection member 5 is positioned around the electrode lead, the expanded intumescent fire protection member 5 may wrap the electrode lead or block the gap between adjacent electrode leads, thereby delaying thermal runaway from one battery cell to another adjacent battery cell.

Such an intumescent fire protection member 5 may expand into the space between adjacent battery cells when the battery cell generates heat, thereby isolating the adjacent battery cells from each other. Preferably, the physical member 4 located closest to the cell stack 2 may be a bus-bar frame assembly (BFA), and the structure of the battery module will be described in more detail in the following embodiments.

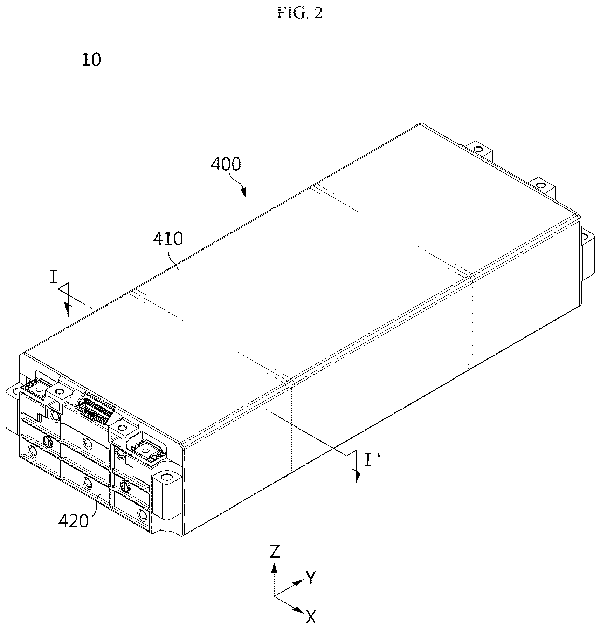

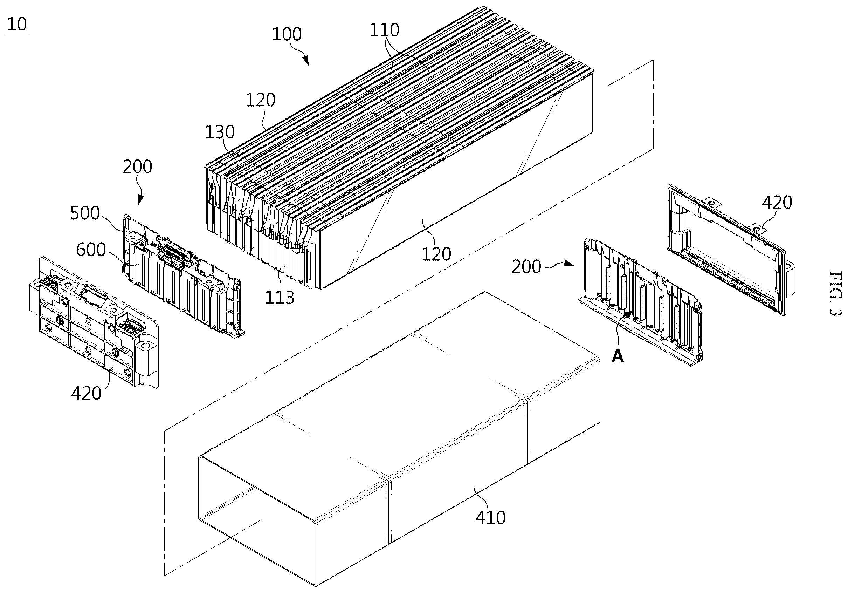

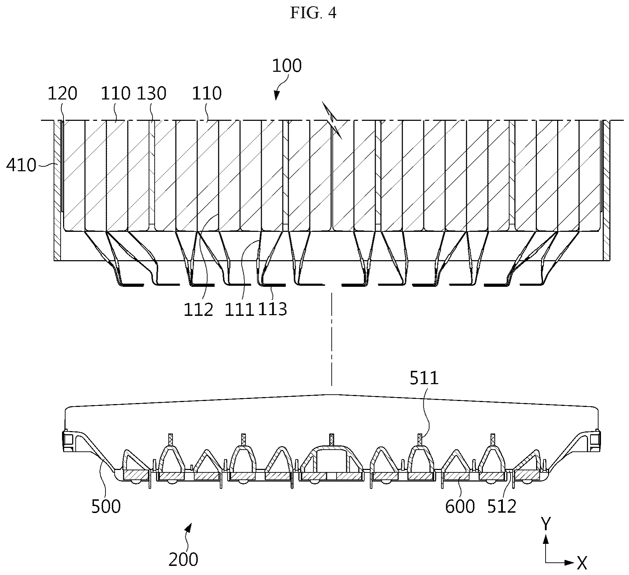

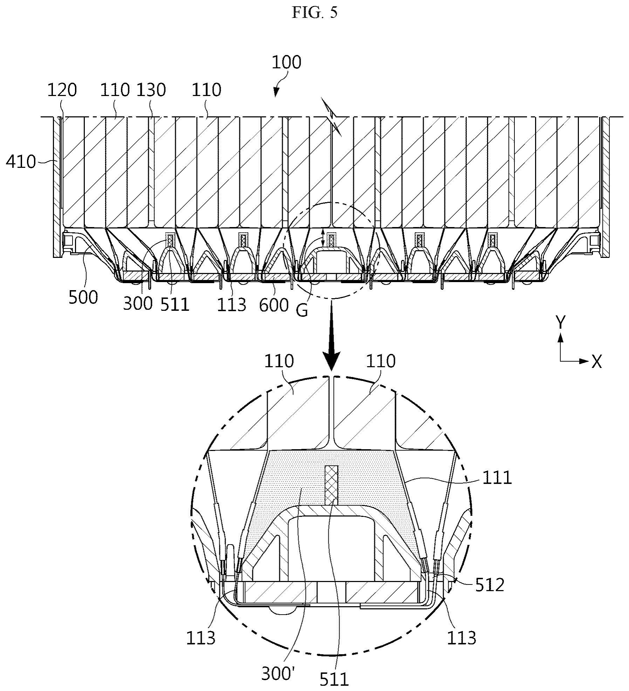

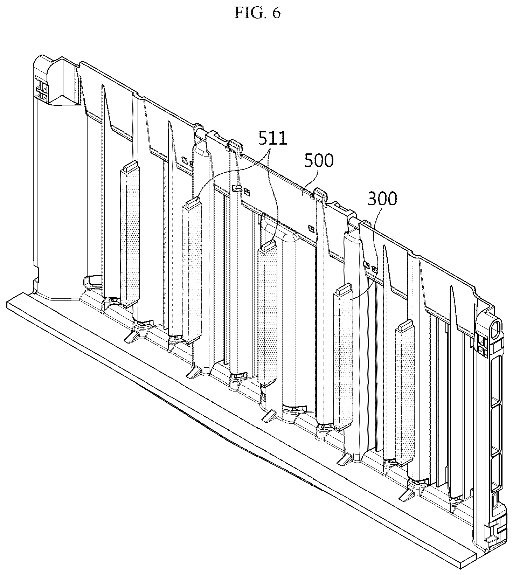

FIG. 2 is a perspective view of a battery module according to an embodiment of the present disclosure. FIG. 3 is an exploded perspective view of a battery module according to an embodiment of the present disclosure. FIG. 4 is a top view of a battery module in which a bus-bar frame has not been coupled to a cell stack according to an embodiment of the present disclosure. FIG. 5 is a top view illustrating a partial cross-section of a battery module in which a bus-bar frame has been coupled to a cell stack according to an embodiment of the present disclosure. For example, FIG. 5 may be a cross-sectional view taken along line I-I' in FIG. 2. FIG. 6 is an enlarged view of part A in FIG. 3.

First, referring to FIGS. 2 to 4, a battery module 10 according to an embodiment of the present disclosure includes a cell stack 100, a bus-bar frame assembly 200, an intumescent fire protection member 300, and a module case 400.

The cell stack 100 may include a plurality of battery cells 110. The battery cell 110 may include an electrode assembly (including a positive electrode plate, a negative electrode plate, and a separator), an electrolyte, and a battery case. The plurality of battery cells 110 may be electrically connected to each other. For example, the plurality of battery cells 110 may be electrically connected in series and/or in parallel to each other through a bus-bar 600 of the bus-bar frame assembly 200.

Meanwhile, the present disclosure is not limited to a specific type or form of the battery cell 110, and various battery cells 110 known at the time of filing the present disclosure may be applied to configure the battery module 10 of the present disclosure. In the present embodiment, a pouch-type battery cell with high energy density and easy stacking will be mainly described as shown in the drawing, but a prismatic battery cell or a cylindrical battery cell may also be applied to the battery cell 110.

As shown in detail in FIG. 4, the battery cell 110 may include a receiving portion 112 and a sealing portion 111. The receiving portion 112 may be configured to accommodate an electrode assembly, and the sealing portion 111 may be configured such that the outer edge of the receiving portion 112 is heat-fused and sealed. Each of the plurality of battery cells 110 may include an electrode lead 113. The electrode lead 113 may be connected to the electrode assembly and configured to extend to the outside of the battery case. A pair of electrode leads 113 may be provided, and the pair of electrode leads 113 may extend from both ends of the battery cell 110, that is, in the longitudinal direction (Y-axis direction). That is, the electrode leads 113 may extend in both directions. In this case, the pair of electrode leads 113 may be a positive electrode lead and a negative electrode lead. Depending on the need, the battery cell 110 may be configured such that two electrode leads 113 are located only at one end in the Y-axis direction. That is, the electrode lead 113 may extend in one direction.

The cell stack 100 may be configured by stacking the plurality of battery cells 110 in one direction. For example, as shown in FIG. 3, the plurality of battery cells 110 may be stacked to be disposed side by side in the left-right direction (X-axis direction) while standing in the vertical direction (Z-axis direction). In this case, each battery cell 110 may have a sealing portion 111 facing in the front-back direction (Y-axis direction) and the upward-downward direction (Z-axis direction) and a receiving portion 112 facing in the left-right direction (X-axis direction).

A component included in the battery module 10 for electrical connection between the battery cells 110 included in the cell stack 100 is a bus-bar frame assembly 200. The bus-bar frame assembly 200 is provided on the side of the battery cell 110 where the electrode lead 113 extends. Since the bus-bar frame assembly 200 is formed on the side where the electrode lead 113 extends, it may be formed on at least one of the front and rear sides of the battery cell 110. Therefore, the bus-bar frame assembly 200 may be disposed on at least one side of the cell stack 100. As in the illustrated example, the bus-bar frame assembly 200 may be provided on both sides of the battery cell 110 in the front-back direction. Therefore, the bus-bar frame assembly 200 may be provided at the longitudinal end of the battery cell 110.

The bus-bar frame assembly 200 may include a bus-bar 600 electrically connected to the battery cell 110 and a bus-bar frame 500 supporting it. The bus-bar frame assembly 200 may further include a terminal bus-bar and a circuit in the form of a PCB or FPCB.

The bus-bar 600 is electrically connected to the battery cell 110 and connects the battery cells 110 to each other, and is made of metal with excellent conductivity, such as copper or aluminum. The terminal bus-bar is also electrically connected to the battery cell 110 and is related to charging and discharging. The circuit may be configured to measure the voltage of the battery cells 110 connected in series and measure the temperature of an arbitrary battery cell 110.

The bus-bar frame 500 is a physical member that supports the bus-bar 600 and the like, and may also be used to shape the electrode leads 113 to be bent and welded to the bus-bar 600. The physical member closest to the battery cell 110 in the battery module 10 is the bus-bar frame assembly 200, i.e., the bus-bar frame 500.

The bus-bar frame 500 is preferably made of a plastic material to secure insulation. For example, the bus-bar frame 500 may be made of one or more materials selected from the group consisting of modified polypropylene oxide (MPPO), polycarbonate (PC), polyethylene (PE), and polybutylene terephthalate (PBT). The bus-bar frame 500 made of a plastic material may be injection-molded.

The module case 400 may be configured to have an inner space accommodating the cell stack 100, the bus-bar frame assembly 200, and the intumescent fire protection member 300 therein. The module case 400 may include a plurality of venting holes (not shown) on the lower surface.

The module case 400 of the present embodiment may include a case body 410 and end plates 420 disposed on the front and rear sides of the case body 410. The types and shapes of the module case 400 may vary, and the present disclosure is not limited thereto.

Here, the case body 410 may have an upper plate, a lower plate, a left plate, and a right plate to form a storage space, and the cell stack 100 may be stored in the storage space. The case body 410 may be made of a metal material having rigidity and heat resistance to physically or chemically protect the accommodated cell stack 100.

In addition, the end plate 420 may be configured to be coupled to the case body 410 and cover an opening of the case body 410. More specifically, the case body 410 may be configured to front and rear openings, and the end plates 420 may be configured to be coupled to the front and rear openings of the case body 410.

Meanwhile, the case body 410 may be provided with venting holes, enabling directional venting in one direction. A plurality of venting holes may be formed on the lower surface of the case body 410, and directional venting toward the bottom of the battery module 10 may be possible through the venting holes. According to this implemented configuration, when gas is discharged from the battery module 10, the discharged gas or flame may be effectively prevented from moving upward. In particular, in the case where a passenger is located above the battery module 10 or the battery pack including the same in an electric vehicle, the above-implemented configuration may suppress or delay the gas from moving toward the passenger.

In the present embodiment, in particular, as shown in detail in FIGS. 4 to 6, the bus-bar frame 500 may include a rib 511 that may be positioned in a gap between the battery cells 110. Specifically, the rib 511 of the bus-bar frame assembly 200 may be at least partially positioned in a gap between the sealing portions 111 and/or between the receiving portions 112 of adjacent battery cells 110. A portion that protrudes convexly from the receiving portion 112 is also called a cup surface. The rib 511 may protrude from the bus-bar frame 500 toward the cup surface.

The rib 511 may be configured in the form of a plate-shaped protrusion with a constant thickness as shown in FIG. 6, or may be a three-dimensional structure with a thickness that is not constant or varies or with a volume rather than a plate shape.

When the bus-bar frame 500 is injection-molded, the rib 511 may be integrally provided with the bus-bar frame 500. The bus-bar 600 may be provided on the front side, i.e., the outer side, of the bus-bar frame 500. Here, the outer side indicates the side facing toward the outside of the battery module 10.

The bus-bar frame 500 has a lead slot 512 formed therein. The lead slot 512 may be located on the side where the electrode leads 113 of the plurality of battery cells 110 are provided. The lead slot 512 may be configured such that at least some of the electrode leads 113 of the plurality of battery cells 110 pass through the same. In this case, a plurality of electrode leads 113 passing through the lead slot 512 may be bent and stacked on each other. This stacked structure may electrically connect the plurality of battery cells 110 whose electrode leads 113 are in contact with each other.

A plurality of lead slots 512 may be provided to be spaced apart from each other in the stacking direction (X-axis direction) of the battery cells 110. In particular, the lead slots 512 may be provided at a position that does not overlap the rib 511. Accordingly, the electrode leads 113 and the ribs 511 may be disposed at positions where they do not normally come into contact with each other, and the electrode leads 113 are not compressed or damaged by the ribs 511.

The bus-bar 600 may be provided between the bus-bar frame 500 and the stacked electrode leads 113. This bus-bar 600 may be electrically connected to the electrode leads 113. In addition, the bus-bar 600 may be configured to transmit status information about the battery cell 110 to an external component through the electrical connection. For example, the bus-bar 600 may be configured to transmit voltage information of the battery cell 110 to an external control device such as a BMS (Battery Management System).

The intumescent fire protection member 300 may be integrally provided with the bus-bar frame assembly 200. For example, the intumescent fire protection member 300 may be formed by a foam coating layer obtained by applying a heat-absorbing foaming material as a paint-like coating material. The coating may be performed by spraying or comma-coating. In addition, the coating may also be performed by various printing methods such as brushing, engraving, roller, silk screen, stamping, inkjet, or the like or by other methods such as quantitative dispensing, spindle coating, and impregnation. In addition to the direct coating methods described above, it is also possible to develop products of the intumescent fire protection member 300 in the form of sheets and tapes depending on the application site and application method of the product.

The intumescent fire protection member 300 may be located on a cell-adjacent surface of the bus-bar frame assembly 200. The cell-adjacent surface is the rear surface of the bus-bar frame 500, i.e., the inner surface thereof. The battery cell 110 tends to swell during use. A gap (e.g., the gap indicated by G in FIG. 5) is provided between the rear surface of the bus-bar frame 500 and the battery cell 110 in consideration of the swelling occurring. If the venting gas moves through this gap, it may affect the adjacent battery cells 110. In the present embodiment, the rib 511 is configured to protrude in the direction of this gap, and the intumescent fire protection member 300 is positioned there. If the intumescent fire protection member 300 expands and reaches the battery cell 110, this gap disappears. FIG. 5 shows the state in which the expanded intumescent fire protection member 300' reaches the battery cell 110 and fills the space between the battery cells 110. According to this configuration, even if a thermal event occurs in one battery cell 110 so that venting gas is discharged, it may be prevented from affecting the adjacent battery cell 110.

In the present embodiment, the intumescent fire protection member 300 may be positioned only on the surface of the rib 511. As shown in the drawing, the rib 511 may be a plate-shaped protrusion with a constant thickness, and the intumescent fire protection member 300 may be provided to wrap the protruding portion. For example, it may wrap wider both sides of the rib 511 and a narrow side therebetween. In this case, the intumescent fire protection member 300 may wrap only a portion of the rib 511 in the longitudinal direction (Z-axis direction), instead of wrapping around one end or the other end in the longitudinal direction. The intumescent fire protection member 300 may not expand in the unwrapped portion of the rib 511. Even when the intumescent fire protection member 300 expands, a space through which gas or flame emitted from the battery cell 110 is able to move may be provided in a portion of the rib 511 that the intumescent fire protection member 300 does not wrap. Therefore, the gas or flame may be guided in a specific direction.

The battery cell 110 tends to swell during use. A gap is provided between the rear surface of the bus-bar frame 500 and the battery cell 110 in consideration of the swelling occurring. The rib 511 is provided in the provided gap. There is no need to change the size of the bus-bar frame 500 in order to provide the rib 511. Therefore, a compact structure of the battery module 10 may be maintained. There is no need to provide a separate space to include the intumescent fire protection member 300 in the battery module 10. The intumescent fire protection member 300 may be positioned on the rib 511. Therefore, a compact structure of the battery module 10 may be maintained.

The intumescent fire protection member 300 may be an intumescent fire protection coating layer. The intumescent fire protection member 300 may be formed by applying an intumescent fire protection material to the rear side of the bus-bar frame assembly 200, particularly, to the rib 511 portion. The fire protection material is a liquid including a foaming material, and may be configured to be hardened when heat is applied or time passes after application.

For example, the fire protection material may be a liquid material obtained by mixing a foaming material and a polymer. In addition, a fire-resistant material may be further added thereto in order to further increase fire resistance. Furthermore, the fire protection material may be configured by further including other components so that it has excellent chemical resistance and excellent adhesion to the adherend. For example, raw materials including a foaming material and polymer are prepared, and a hardener, a leveling agent, a pigment, a solvent, a release agent, a filler, and the like are added thereto in consideration of the coating characteristics (surface strength, acid resistance, weather resistance, or the like) and adhesion and stirred to manufacture a fire protection material. This fire protection material is applied to the rib 511 portion and hardened to form a coating layer.

Here, the polymer may be a resin such as enamel or urethane, or a rubber such as SBR or EPDM. The polymer acts as a binder that provides adhesion and flexibility. The polymer is not limited thereto and may be modified and changed depending on the characteristics of the product to be applied. It may further include epoxy, polysulfide, polysiloxane, polysilalylene, or a combination thereof.

The foaming material may be a material that foams when heated. The degree of expansion due to foaming will vary depending on the type, component ratio, purity, or the like of the foaming material.

As an example of the foaming materials, the foaming material may include an acid source, a blowing agent, and a carbon source. For example, the foaming material may include a polyphosphate acid source, a blowing agent, and a pentaerythritol carbon source. Without being bound by theory, since the foaming material utilizes two energy absorption mechanisms involving the formation of char and subsequent expansion of the char, any foaming material capable of implementing these mechanisms may be used.

The acid source may include, for example, organic or inorganic phosphorus compounds, organic or inorganic sulfate (e.g., ammonium sulfate), or a combination thereof. The organic or inorganic phosphorus compounds may include: organophosphate or organophosphonate (e.g., tris(2,3-dibromopropyl) phosphate, tris(2-chloroethyl) phosphate, tris(2,3-dichloropropyl) phosphate, tris(1-chloro-3-bromoisopropyl) phosphate, bis(1-chloro-3-bromoisopropyl)-1-chloro-3-bromoisopropyl phosphonate, polyaminotriazine phosphate, melamine phosphate, triphenyl phosphate, or guanylurea phosphate); organophosphite ester (e.g., trimethyl phosphite or triphenyl phosphite); phosphazene (e.g., hexaphenoxycyclotriphosphazene); inorganic compounds including phosphorus (e.g., phosphoric acid, phosphorous acid, phosphites, urea phosphates, or ammonium phosphates (e.g., ammonium monohydrogen phosphate, ammonium dihydrogen phosphate, ammonium polyphosphate, or the like)); or a combination thereof.

The blowing agent may include dicyandiamide, azodicarbonamide, melamine, guanidine, glycine, urea (e.g., urea-formaldehyde resin or methylolated guanylurea phosphate), halogenated organic materials (e.g., chlorinated paraffin), or a combination thereof.

The carbon source may include dextrin, phenol-formaldehyde resin, pentaerythritol (e.g., dimer or trimer thereof), clay, polymer (e.g., polyamide 6, amino-poly(imidazoline-amide), or polyurethane), or a combination thereof. The amino-poly(imidazoline-amide) may include repeated amide bonds and imidazoline groups.

Any fire-resistant material may be used as long as it is fire-resistant and suitable for manufacturing a paint using the same.

The formation thickness of the coating layer may be controlled by changing the state of the foaming material, fire-resistant material, and polymer with various solvents or water. If the content of the solvent is too small, the viscosity may be high, which may reduce the coating workability, and if the content is too large, the curing (drying) time may be long, which may not be desirable. The solvent may be an organic solvent such as toluene or xylene, and a polar hydrocarbon. Physical properties may vary depending on the ratio of solvent and the ratio of mixtures. The thickness and degree of expansion may be controlled by adjusting the ratio of solvent according to the user's process characteristics.

In addition, various additives may be used to adjust the material properties after curing and the degree of foaming and expansion so as to maintain the physical strength required in the industry by coating the adherend. Other components other than the foaming material are not limited to the above examples and may be modified and modified depending on the characteristics of the product to be applied.

When the foaming material is heated and foams, the intumescent fire protection member 300 may expand. The intumescent fire protection member 300 may be configured to foam up to the cup surface of the battery cell 110. In particular, if the rib 511 is provided between adjacent battery cells 110 and if the intumescent fire protection member 300 is positioned there, the intumescent fire protection member 300 foams only in that part, so the effect of foaming up to the cup surface of the battery cell 110 and being positioned becomes clear. In addition, the expanded intumescent fire protection member 300' may be deformed in shape to conform to the shape of the gap between the battery cells 110 while filling the gap. Please refer to the inset in FIG. 5. The thickness of the intumescent fire protection member 300 may be determined in consideration of the size of the rib 511 or the size of the free space. In addition, if the thickness of the intumescent fire protection member 300 is too small, the degree of expansion due to foaming may not be sufficient. If the thickness of the intumescent fire protection member 300 is too large, the curing time may be long when coating with a fire-resistant material, and it may be difficult to attain low price.

The front side of the bus-bar frame assembly 200 and the front side of the bus-bar frame 500 are directed toward the outside of the battery module 10. The rear side of the bus-bar frame assembly 200 and the rear side of the bus-bar frame 500 face the cell stack 100. The intumescent fire protection member 300 may be formed by applying an intumescent fire protection material onto the rear surface of the bus-bar frame assembly 200. In the present embodiment, the rib 511 is formed on the rear surface of the bus-bar frame 500. The intumescent fire protection member 300 may be formed on the surface of the rib 511 so as to be positioned facing the cell stack 100. It is preferable that the intumescent fire protection member 300 be insulating to avoid unnecessary conduction, and it is preferable not to form the intumescent fire protection member 300 in a portion that requires electrical connection.

The intumescent fire protection member 300 has a thermal propagation delay effect. For example, when thermal runaway occurs in one battery cell 110, the heat is released through the electrode leads 113 of the battery cell 110. As explained several times above, the intumescent fire protection member 300 is included on the rear surface of the bus-bar frame assembly 200, so that the intumescent fire protection member 300 is positioned on the cell-adjacent surface. The foaming material in the fire protection material expands by the heat released toward the electrode leads 113. The intumescent fire protection member 300 may expand well in all directions. In particular, in the case where the intumescent fire protection member 300 is a coating layer, it may expand in the thickness direction of the coating layer. Therefore, the intumescent fire protection member 300 may expand well from the rear surface of the bus-bar frame assembly 200 toward the cell stack 100. The expanded intumescent fire protection member 300' may compress the vicinity of the electrode leads 113 of the battery cell 110 to delay thermal propagation to the adjacent battery cell 110. In particular, the intumescent fire protection member 300 may expand to reach the cup surface of the battery cell 110. Then, the isolation of the adjacent battery cells 110 becomes more certain.

The expanded intumescent fire protection member 300' may block air from flowing in. Therefore, it may prevent fire from spreading. In addition, it exhibits a heat-insulating effect and a combustion delay effect. In particular, the expanded intumescent fire protection member 300' may expand to the cup surface between the adjacent battery cells 110 to fill the space between the electrode leads 113 of the adjacent battery cells 110 to isolate them from each other, obtaining an excellent thermal propagation delay effect.

The function of the intumescent fire protection material that may form the intumescent fire protection member 300 will be further explained as follows.

The foaming material inside the fire protection material of the fire protection material coating layer may foam to generate char. The foaming material may foam into a condensed phase and a gas phase, so that the coating layer expands to form char in the condensed phase and so that radicals are captured in the gas phase. The char prevents heat and air from penetrating into the coating layer in the condensed phase, thereby exhibiting a heat-insulating effect and a combustion delay effect. For example, materials may be selected in order to obtain the heat-insulating effect of the coating layer in which the temperature inside a steel frame remains at 500 degrees C or less even in the case of a fire at 1000 degrees C, thereby preventing deterioration of the strength of the steel frame.

The expanded intumescent fire protection member 300' may perform a function of blocking heat such as flame generated from the ignited battery cell 110, when the battery module 10 ignites internally, from moving in the stacking direction of the battery cell 110 or in the longitudinal direction of the battery cell 110. The flame or gas may move in the upward-downward direction, so that it may be discharged outside the battery module 10 without affecting other battery cells 110. In the case where the venting holes of the battery module 10 are formed on the lower surface of the case body 410, the direction of movement of the flame or gas may be guided downward from inside the battery module 10 to safely discharge it.

As described above, according to the present disclosure, it is possible to minimize thermal propagation to adjacent battery cells 110. The gas and flame from one battery cell 110 in which thermal runaway has occurred may be prevented from moving toward the positive/negative electrode leads of another battery cell 110, and may be released into the upper or lower space that is not filled with the expanded intumescent fire protection member 300'. As described above, according to the present disclosure, the discharge direction of gas and flame may be controlled to improve the safety of the battery module 10 or the battery pack including the same.

If the flame discharge direction is not controlled, the heat easily spreads to the adjacent battery cell by the flame and substances discharged from the battery cell in which thermal runaway has occurred. In particular, in the pouch-type battery cell, flame is easily emitted toward the positive/negative electrodes, so the heat spreads to the adjacent battery cell more easily. However, according to the present disclosure, flame or gas may be prevented from moving to the adjacent battery cell through the electrode leads, thereby reliably blocking thermal propagation.

The expanded intumescent fire protection member 300' may extend to the cup surface between adjacent battery cells 110 and fill the space between the electrode leads 113 of the adjacent battery cells 110. As a result, conductive materials included in the gas discharged from a battery cell 110 where thermal runaway has occurred are unable to be accumulated in the space between the electrode leads 113. Therefore, it is possible to prevent a short circuit of the battery module 10 or the battery pack including the same due to unintended current conduction by the accumulated conductive materials. As described above, according to the present disclosure, explosion due to a short circuit of the battery module or the battery pack may be prevented in a thermal runaway situation.

According to the present disclosure, it is possible to delay thermal propagation between adjacent battery cells by simply providing the intumescent fire protection member 300. Since many components are not used for thermal propagation delay, a compact battery module 10 may be manufactured.

Multiple intumescent fire protection members 300 may be provided. The intumescent fire protection member 300 may be formed on each rib 511. In addition, the rib 511 may be provided between every sealing portion 111 of the adjacent battery cell 110. According to the above-implemented configuration of the present disclosure, the intumescent fire protection member 300 may be provided in each space between adjacent battery cells 110, thereby obtaining an excellent thermal propagation delay effect.

Meanwhile, the cell stack 100 included in the battery module 10 of the present disclosure may further include blocking members 120 and 130. Multiple blocking members 120 and 130 may be included. In this case, the multiple blocking members 120 and 130 may be disposed to be spaced apart from each other by a predetermined distance along one direction, that is, the stacking direction of the battery cells 110. In addition, the multiple blocking members 120 and 130 may be provided at regular intervals between every one or more battery cells 110 (for example, between every one battery cell 110 or between every two or more battery cells 110). The blocking members 120 and 130 may be in direct contact with both sides of at least some of the battery cells 110. In particular, the blocking members 120 and 130 may be in direct contact with the receiving portion 112 of the battery cell 110. In the present embodiment, a plurality of blocking members 120 and 130 may be provided to be positioned between every two or more battery cells 110.

The blocking members 120 and 130 may be configured in the form of a compressible pad and may be made of a material with excellent heat resistance and/or fire resistance, such as silicone, aerogel, or polyurethane. Since the blocking members 120 and 130 are compressible, it may effectively respond to the expansion of the battery cell 110 when the battery cell 110 is swelling.

In addition, when the battery module 10 ignites internally, the blocking members 120 and 130 with heat resistance and/or fire resistance may perform a thermal barrier function of blocking heat such as flame generated from the ignited battery cell 110 from spreading in the stacking direction of the battery cells 110. Accordingly, the blocking members 120 and 130, along with the intumescent fire protection member 300, may further minimize thermal propagation to adjacent battery cells 110. The blocking members 120 and 130 may block high-temperature gas, flame, and discharges generated from the battery cell 110, as well as heat. As described above, the blocking members 120 and 130 may partition or separate the battery cells 110 to prevent flame or the like from spreading between the battery cells 110.

The blocking member 120 may be located at the outermost portion of the cell stack 100, and the blocking member 130 may be located between the battery cells 110.

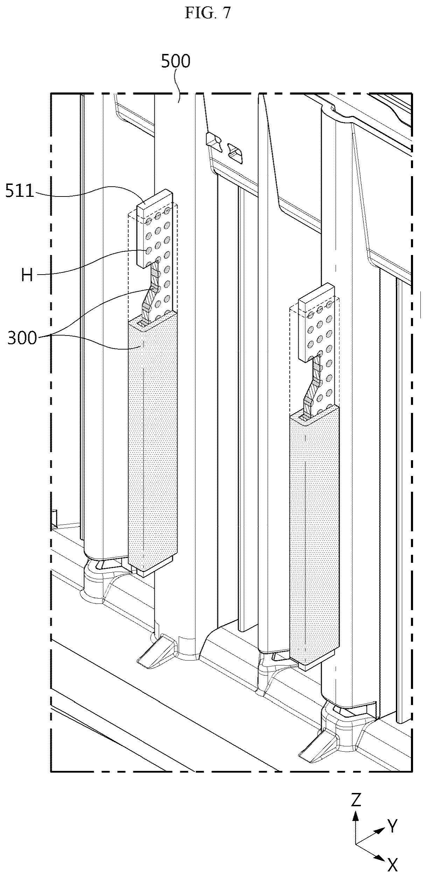

FIG. 7 is an enlarged view of a part of a bus-bar frame in a battery module according to another embodiment of the present disclosure. For example, FIG. 7 may be an enlarged view of part A in FIG. 3, similar to FIG. 6.

Referring to FIG. 7, the rib 511 has a hole H that penetrates both sides of the rib 511. For example, the rib 511 may have a mesh structure having multiple holes H. In the mesh structure, the shape of the hole H may be configured in various shapes such as a circle, a square, or a hexagon.

An intumescent fire protection member 300 is formed on the surface of the rib 511. The intumescent fire protection member 300 may be formed by applying fire protection material as described above. As shown in the inset of FIG. 7, the intumescent fire protection members 300 on both sides of the rib 511 may meet through the hole H, that is, the fire protection material may meet at the inside and outside of the rib 511 and then solidify, so that the hole H is filled with the intumescent fire protection member 300. In order to maximize the effect of the fire protection material, it is applied sufficiently so that the inside and outside of the rib 511 are connected. According to the present embodiment, it is possible to provide structural rigidity while maximizing the amount of the fire protection material.

As another example, it is also possible to prepare a rib 511 equipped with an intumescent fire protection member 300 as a component in which a fire-resistant material is packaged on the surface of a mesh-type rib 511 and assemble it to the bus-bar frame 500. The packaged component may be made by heterogeneous injection-molding. Heterogeneous injection-molding is also known as low-pressure injection-molding. Hot melt material may be injected into a mold at a very low pressure, for example, an injection pressure of 0.15 to 4 MPa, and quickly cured. Therefore, in this case, a fire-resistant material is prepared by including a foaming material in a thermoplastic resin, and the rib 511 is first placed in the injection mold, and the fire-resistant material is injected into the cavity of the injection mold so that the fire-resistant material wraps the rib 511 and then cured to obtain a final injection-molding product. The extracted injection-molding product may be assembled to an appropriate portion of the bus-bar frame 500 and used.

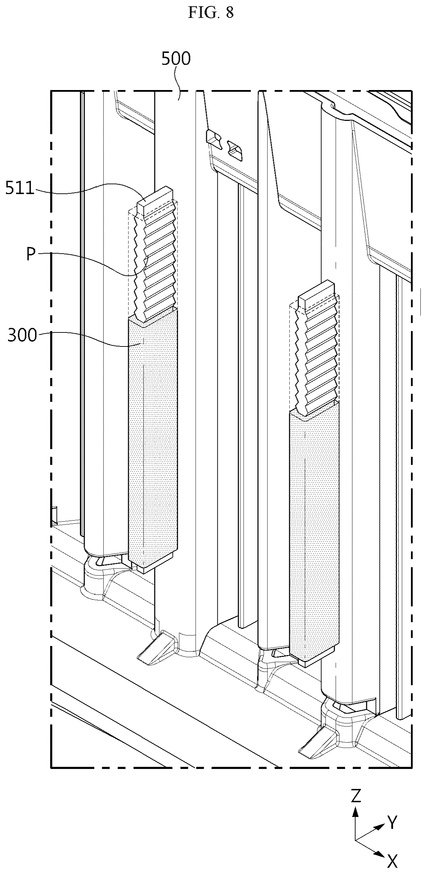

FIG. 8 is an enlarged view of a part of a bus-bar frame in a battery module according to another embodiment of the present disclosure. For example, FIG. 8 may be an enlarged view of part A in FIG. 3, similar to FIG. 6.

Referring to FIG. 8, repetitive notches or a sawtooth-shaped uneven portion P is provided on one side of a contact surface of the rib 511 with the intumescent fire protection member 300 in order to increase the contact area with the intumescent fire protection member 300.

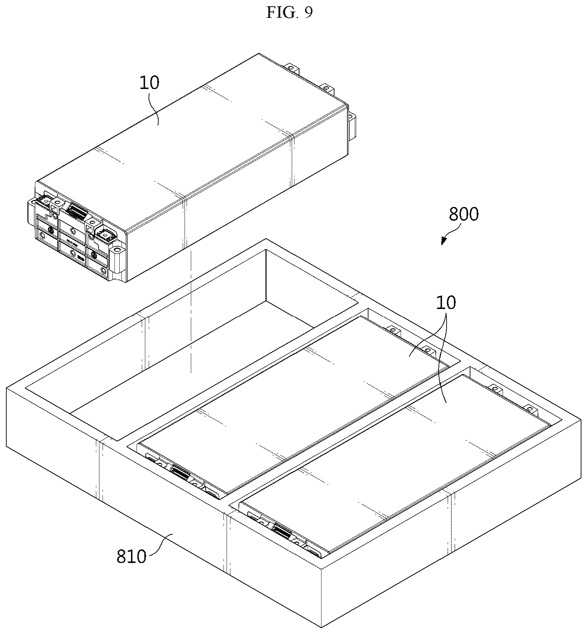

FIG. 9 is a schematic drawing illustrating a battery pack according to an embodiment of the present disclosure. A battery pack 800 according to an embodiment of the present disclosure may include one or more battery modules 10 according to an embodiment of the present disclosure described above. The battery pack 800 according to the present disclosure may further include components of the battery pack known at the time of filing the present disclosure, such as a BMS for integrated control of charging and discharging of one or more battery modules 10, a current sensor, a fuse, and the like. The BMS estimates the status of battery cells in the battery pack and manages the battery pack using the estimated status information. For example, it estimates and manages status information of the battery pack such as an SOC (state of charge), an SOH (state of health), the maximum input/output power allowance, and output voltage of the battery pack. In addition, it is possible to control charging or discharging of the battery pack using this status information and estimate the replacement time of the battery pack.

The battery modules 10 may be configured in a substantially cuboid shape and arranged regularly inside a pack case 810, and the respective battery modules 10 are connected to secure the power required for driving the vehicle.

The pack case 810 is a container that stores and fixes the battery modules 10 and is a box in a cuboid shape. In addition, the pack case 810 may be disposed in a predetermined position in the vehicle.

In addition, in the battery pack according to the present disclosure, the module case 400 described above may function as a pack case. In this case, the module case 400 may include components of the battery pack, such as a BMS, a bus-bar, and a relay stored therein. In this case, it is also called a cell-to-pack type in which the battery cells 110 are stored directly in the pack case.

The battery pack 800 according to the embodiment of the present disclosure may be applied to various devices. These devices may be means of transportation such as electric bicycles, electric vehicles, and hybrid vehicles, but the present disclosure is not limited thereto. The battery pack 800 is suitable for use as a battery pack for electric vehicles. In addition, it may also be used as an energy source for ESSs. The ESS indicates a standalone system that stores power of hundreds of kWH or more. The ESS is the core of the renewable energy industry. Since it is difficult to produce power at a desired time from renewable energy sources such as solar and wind power, it is important to store power and use it at a required time. The battery pack 800 according to the embodiment of the present disclosure may have an energy density and capacity suitable to be used as an energy source for such ESSs.

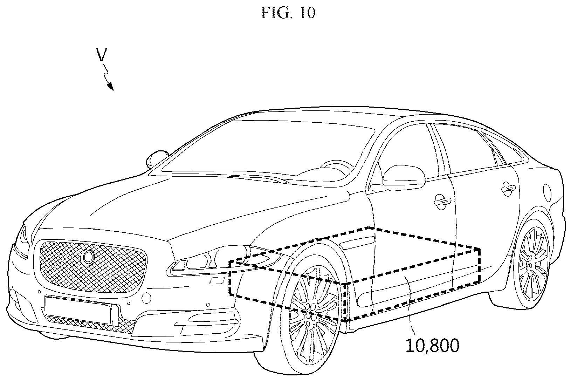

FIG. 10 is a schematic drawing of a vehicle according to an embodiment of the present disclosure.

A vehicle V according to an embodiment of the present disclosure may include one or more battery packs 800 according to an embodiment of the present disclosure or one or more battery modules 10 according to an embodiment of the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V operates by receiving power from the battery pack 800 or the battery module 10 according to an embodiment of the present disclosure.

In addition to the battery pack 800 or the battery module 10 according to an embodiment of the present disclosure, the vehicle V may further include various other components included in the vehicle, such as a car body or a motor.

The battery pack 800 or the battery module 10 may be disposed at a predetermined position inside the vehicle V. The battery pack 800 or the battery module 10 may be electrically connected to the motor of the vehicle V through an inverter. The battery pack 800 or the battery module 10 may be used as an electric energy source to drive the motor of the vehicle V by providing driving power to the motor of the vehicle V. In this case, the battery pack 800 or the battery module 10 is configured to have a high nominal voltage of 100 V or more. The battery pack 800 or the battery module 10 may be charged or discharged by the inverter according to the driving of the motor and/or internal combustion engine. The battery pack 800 or the battery module 10 may be charged by a regenerative charging device combined with a brake.

As described above, the battery pack 800 or the battery module 10 equipped in the vehicle V may provide electric energy required for various operations of the vehicle V. In addition, since the battery pack 800 or the battery module 10 has various effects as mentioned above, the vehicle V including the same may also have such effects.

For example, the battery pack 800 or the battery module 10 may have high safety. Since the vehicle is directly related to human life, safety is something that cannot be compromised. The battery cell 110, which may be a lithium ion battery, has a risk of fire due to the physical characteristics of lithium. However, even if a thermal event occurs in the battery cell 110 of the battery pack 800 or battery module 10 according to the present disclosure, it may be prevented from transferring to other parts. In addition, the battery pack 800 or the battery module 10 according to the present disclosure has further enhanced thermal stability. Therefore, the vehicle V including the battery pack 800 or the battery module 10 has improved stability.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### [Description of symbols]

| | | | |
|---|---|---|---|
| 1, 10: | battery module | 2,100: | cell stack |
| 3, 400: | module case | 110: | battery cell |
| 111: | sealing portion | 112: | receiving portion |
| 113: | electrode lead | 120,130: | blocking member |
| 200: | bus-bar frame assembly | 300: | intumescent fire protection member |
| 500: | bus-bar frame | 511: | rib |
| 512: | lead slot | 600: | bus-bar |
| 800: | battery pack | H: | hole |
| P: | uneven portion | V: | vehicle |

## Claims

1. A battery module comprising:
a cell stack comprising multiple battery cells; and
one or more physical members,
wherein an intumescent fire protection member is provided on a surface of a physical member closest to the cell stack, among the physical members, which faces the cell stack,
wherein the intumescent fire protection member is a coating layer formed integrally with the physical member by applying an intumescent fire protection material, and
wherein the intumescent fire protection member is configured to expand into a space between adjacent battery cells when the battery cell generates heat, thereby isolating the adjacent battery cells from each other.

2. A battery module comprising:
a cell stack comprising multiple battery cells;
a bus-bar frame assembly disposed on at least one side of the cell stack and comprising a bus-bar and a bus-bar frame; and
an intumescent fire protection member provided in the bus-bar frame assembly,
wherein the bus-bar frame comprises a rib to be positioned in a gap between adjacent battery cells, and
wherein the intumescent fire protection member is located on the rib.

3. The battery module according to claim 2,
wherein the battery cell is a pouch-type battery cell comprising an electrode lead, a receiving portion, and a sealing portion, and
wherein the rib of the bus-bar frame is at least partially positioned in a gap between the sealing portions or receiving portions of adjacent battery cells and protrudes toward the receiving portion.

4. The battery module according to claim 2,
wherein the rib is a plate-shaped protrusion having a constant thickness.

5. The battery module according to claim 3,
wherein the rib is integrally injection-molded with the bus-bar frame and is provided at a position that does not overlap a lead slot, which is provided in the bus-bar frame so that the electrode lead passes therethrough.

6. The battery module according to claim 3,
wherein the intumescent fire protection member is configured to expand into a space between adjacent battery cells when the battery cell generates heat, thereby isolating the adjacent battery cells from each other.

7. The battery module according to claim 3,
wherein the intumescent fire protection member is configured to expand to the receiving portion when the battery cell generates heat.

8. The battery module according to claim 3,
wherein a gap is maintained between a rear surface of the bus-bar frame and the battery cell,
wherein the rib is provided on the rear surface of the bus-bar frame so as to protrude in a direction of the gap, and
wherein the intumescent fire protection member is configured to expand when the battery cell generates heat and reach the battery cell to eliminate the gap.

9. The battery module according to claim 8,
wherein the expanded intumescent fire protection member is configured to fill a gap between the battery cells and be shaped to conform to a shape of the gap.

10. The battery module according to claim 2,
wherein the intumescent fire protection member is a coating layer formed integrally with the rib by applying an intumescent fire protection material.

11. The battery module according to claim 10,
wherein the intumescent fire protection member is configured to wrap only a portion of the rib in a longitudinal direction, instead of wrapping one end or the other end of the rib in the longitudinal direction.

12. The battery module according to claim 10,
wherein the fire protection material is a liquid paint obtained by mixing a foaming material and a polymer, and
wherein the intumescent fire protection member is insulating.

13. The battery module according to claim 2,
wherein the intumescent fire protection member is configured to block flame and gas generated from a battery cell that has ignited when the battery module ignites internally from moving in a stacking direction of the battery cells or a longitudinal direction of the battery cells.

14. The battery module according to claim 2,
wherein the battery module further comprises a module case configured to accommodate the cell stack, the bus-bar frame assembly, and the intumescent fire protection member, and comprises multiple venting holes on a lower surface of the module case.

15. The battery module according to claim 2,
wherein the cell stack is in the form of a compressible pad and further comprises a blocking member made of silicone, aerogel, or polyurethane.

16. The battery module according to claim 2,
wherein the rib has a hole penetrating both sides thereof, and
wherein an intumescent fire protection member formed on a surface of the rib is configured to fill the hole.

17. The battery module according to claim 2,
wherein the rib is a component in which a fire-resistant material is packaged on a surface of the rib by heterogeneous injection-molding, and
wherein the rib is assembled to the bus-bar frame.

18. The battery module according to claim 2,
wherein repetitive notches or a sawtooth-shaped uneven portion is provided on one side of a contact surface of the rib with the intumescent fire protection member.

19. A battery pack comprising at least one battery module according to any one of claims 1 to 18.

20. A vehicle comprising at least one battery module according to any one of claims 1 to 18.
